# EUROPEAN PATENT SPECIFICATION

(11) **EP 2 294 570 B1**
(45) Date of publication and mention of the grant of the patent: **30.07.2014**
(21) Application number: 09755279.8
(22) Date of filing: 01.06.2009
(51) Int. Cl.: G09G 5/00, G06F 11/20

(54) **REDUNDANCY METHODS AND APPARATUS FOR SHADER COLUMN REPAIR**
REDUNDANZVERFAHREN UND VORRICHTUNGEN ZUR SCHATTIERERSÄULENREPARATUR
PROCÉDÉS DE REDONDANCE ET APPAREIL POUR RÉPARER UNE COLONNE DE NUANCEUR

(30) Priority: 30.05.2008 US 57513 P
(43) Date of publication of application: 16.03.2011
(73) Proprietor: Advanced Micro Devices, Inc., Sunnyvale, CA 94088 (US)
(72) Inventor: MANTOR, Michael, J., Orlando FL 32825 (US); BRADY, Jeffrey, T., Orlando FL 32828 (US); SOCARRAS, Angel, E., Lake Mary FL 32746 (US)
(74) Representative: Kenrick, Mark Lloyd
(86) International application number: PCT/US2009/003314
(87) International publication number: WO 2009/145916

(56) References cited:
- US-A- 5 218 680
- US-A1- 2005 066 148
- US-A1- 2006 053 188
- US-A1- 2006 053 188
- US-A1- 2006 093 044
- US-A1- 2008 094 405
- US-A1- 2008 094 405
- US-B2- 7 110 006

## Description

### BACKGROUND

### Field of the Invention

The present invention is generally directed to computing operations performed in computing systems, and more particularly directed to graphics processing tasks performed in computing systems.

### Related Art

A graphics processing unit (GPU) is a complex integrated circuit that is specially designed to perform graphics processing tasks. A GPU can, for example, execute graphics processing tasks required by an end-user application, such as a video game application. In such an example, there are several layers of software between the end-user application and the GPU.

The end-user application communicates with an application programming interface (API). An API allows the end-user application to output graphics data and commands in a standardized format, rather than in a format that is dependent on the GPU. Several types of APIs are commercially available, including DirectX® developed by Microsoft Corp. and OpenGL® developed by Silicon Graphics, Inc. The API communicates with a driver. The driver translates standard code received from the API into a native format of instructions understood by the GPU. The driver is typically written by the manufacturer of the GPU. The GPU then executes the instructions from the driver.

A GPU produces the pixels that make up an image from a higher level description of its components in a process known as rendering. GPU's typically utilize a concept of continuous rendering by the use of pipelines to process pixel, texture, and geometric data. These pipelines are often referred to as shader pipes or shader pipelines, "shader" being a term in computer graphics referring to a set of software instructions used by a graphic resource primarily to perform rendering effects. In addition, GPU's can also employ multiple pipelines in a parallel processing design to obtain higher throughput. A multiple of shader pipelines can also be referred to as a shader pipe array.

Document US 2006/053188 discloses a redundant shader pipe repair system comprising a shader pipe array, a redundant shader switch and a redundant shader pipe array. Similar background disclosures are contained in documents US 2005/066148 and US 2008/094405.

Periodically an error occurs somewhere within a pipeline as a shader pipe array, for example, as a result of a production defect. As the number of errors increase the overall yield of acceptable rendering calculations decreases. Typically the method used to correct a defective pipeline would be to recalculate the entire array of data within the shader pipe array. While this method can correct the defective pipeline data, it also consumes a fair amount of processing time to recalculate the entire array of data. This recalculation effort due to even a single defective element within a single pipeline effectively decreases a system's overall performance, or the production yield amount of effective product.

What are needed, therefore, are systems and/or methods to alleviate the aforementioned deficiencies. Particularly, what is needed is a highly efficient, cost effective approach to overcome the effects of a defective shader pipe with minimal impact on overall product production or performance.

### BRIEF SUMMARY

The present invention is defined by the appended independent Claim 1. As embodied and broadly described herein, are a method and apparatus for shader pipeline repair comprising a shader pipe array, a redundant shader pipe array, a redundant shader switch, a sequencer, and a texture fetch system. During manufacturing test, system level test, or start up test, if a defect is noted, a control register is configured to map defective shader pipe columns to redundant shader pipe column. If the redundant shader control register indicates a defect in a shader pipe column within the shader pipe array, data that was to be directed to the defective shader pipe column is transferred by a redundant shader switch directly via a horizontal path to a redundant shader pipe array column where it is processed. This can be controlled uniquely per row, or common for all rows. A defective shader pipe within the shader pipe array could be caused, for example, because of a manufacturing defect, post-manufacturing defect, component degradation, external interference, and/or inadvertent static discharge, or other electrical or environmental condition or occurrence. A shader pipe will be defective if a static or intermittent error condition is detected during testing. Testing can occur at the time of manufacturing or periodically (e.g., at the time of start-up or initialization) during use of the product. Once the data is processed by the redundant shader pipe array it is re-inserted into the correct output column by the redundant shader switch. In addition, the redundant shader switch synchronizes the redundant shader pipe array data so that the redundant shader pipe array data is correctly positioned and timed with other output data. In this manner, a defective shader pipe is "repaired" by re-routing data that was destined to a defective shader pipe to a redundant shader pipe for processing

In an embodiment of the invention, the shader pipe array comprises one or more Vertical Shader Pipe Columns where each column is made up of one or more Shader Pipe blocks. In this embodiment the shader pipe array is configured as a (M · N) array with M Vertical Shader Pipe Columns where each column comprises N rows of Shader Pipe blocks.

In another embodiment the redundant shader pipe comprises one or more Vertical Redundant Shader Pipe Columns where each column is made up of one or more Redundant Shader Pipe blocks. In this embodiment the redundant shader pipe array is configured as a (X · N) array with X Vertical Redundant Shader Pipe Columns where each column comprises N rows of Redundant Shader Pipe blocks.

In another embodiment where the redundant shader pipe comprises more than one Vertical Redundant Shader Pipe Column, the redundant shader pipe is capable of simultaneously receiving, processing, and outputting data destined to the more than one defective shader pipe column in a single shader pipe array to the more than one Vertical Redundant Shader Pipe Columns. As such, each redundant column is capable of repairing an individual column in the primary shader array.

In another embodiment the redundant shader pipe array would include an input and output module. The input module can transfer data to a redundant shader pipe column for processing that was initially destined to a defective shader pipe prior to the data entering the shader pipe array. In this embodiment the output unit of the shader pipe array would also multiplex the processed shader pipe array data from the redundant shader pipe array back into the correct output column and synchronize the output to coincide with other output data.

Further features and advantages of the invention, as well as the structure and operation of various embodiments of the present invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE FIGURES

The accompanying drawings, which are incorporated in and constitute part of the specification, illustrate embodiments of the invention and, together with the general description given above and the detailed description of the embodiments given below, serve to explain the principles of the present invention. In the drawings:
FIG. 1 is a system diagram depicting an implementation of a redundant shader pipe repair system.
FIG. 2 is a system diagram depicting an implementation of a redundant shader pipe repair system illustrating the details of a shader pipe array.
FIG. 3 is a system diagram depicting an implementation of a redundant shader pipe repair system illustrating the details of a redundant shader switch output.
FIG. 4 is a system diagram depicting an implementation of a redundant shader pipe repair system illustrating the details of a redundant shader pipe array in a single column.
FIG. 5 is a system diagram depicting an implementation of a redundant shader pipe repair system illustrating the details of a multiple column redundant shader pipe array.
FIG. 6 is a flowchart depicting an implementation of a method for redundant shader pipe repair.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

The present invention relates to a shader pipe array wherein there is a redundant shader pipe array with the ability to process data destined to a defective shader pipe. In embodiments of this invention, defective shader pipes are identified and then through the use of a redundant shader switch, data that was destined to the identified defective shader pipe is instead transferred, via a horizontal path, to a redundant shader pipe array where the shader pipe data is processed. The redundant shader switch also controls returning the processed redundant shader pipe data to the correct output column at the correct time in line with other output data. In this manner the effects of a defective shader pipe can be repaired and the redundant shader pipe array can be used to increase the initial yield at the point of manufacture or to extend the useful life of a device where a subsequent defective shader pipe would otherwise render the device unusable or operating in a degraded condition.

While specific configurations, arrangements, and steps are discussed, it should be understood that this is done for illustrative purposes only. A person skilled in the pertinent art(s) will recognize that other configurations, arrangements, and steps can be used within the scope of the appended claims. It will be apparent to a person skilled in the pertinent art(s) that this invention can also be employed in a variety of other applications.

It is noted that references in the specification to "one embodiment," "an embodiment," "an example embodiment," etc., indicate that the embodiment described can include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of one skilled in the art to incorporate such a feature, structure, or characteristic in connection with other embodiments whether or not explicitly described.

While the present invention is described herein with reference to illustrative embodiments for particular applications, it should be understood that the invention is not limited thereto. Those skilled in the art with access to the teachings provided herein will recognize additional modifications, applications, and embodiments within the scope thereof and additional fields in which the invention would be of significant utility.

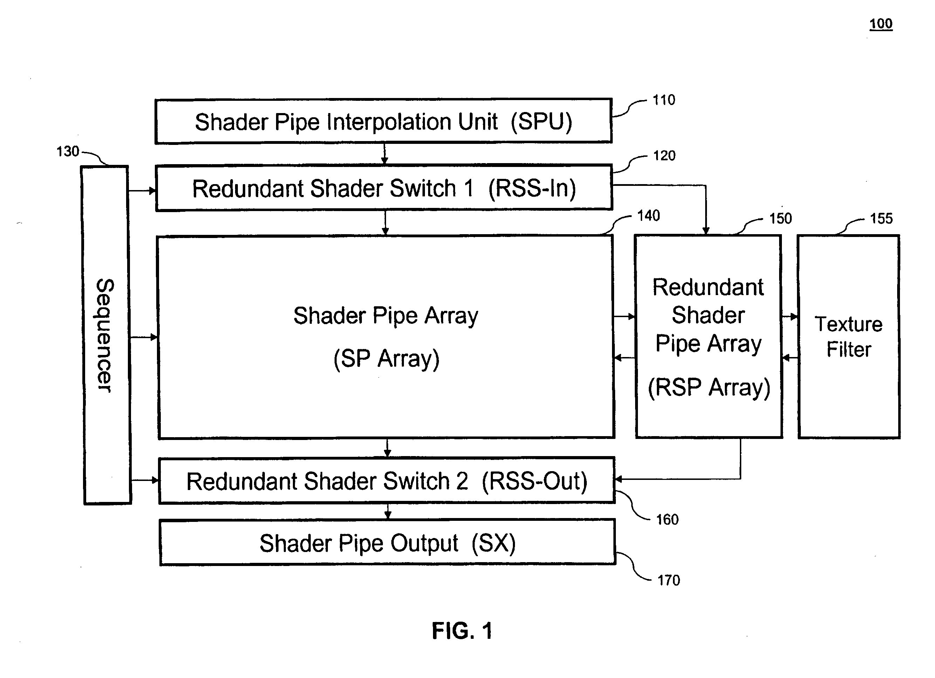

FIG. 1 is an illustration of a shader system 100 within a graphics processing unit according to an embodiment of the present invention. System 100 comprises a shader a sequencer 130, a pipe array 140, a redundant shader switch (RSS) represented as RSS-In 120 and RSS-Out 160, a redundant shader pipe array 150, and a texture filter 155. Also shown are a shader pipe interpolation unit 110 that inputs pixel data and the shader pipe output 170 to which processed pixel data is directed.

Shader pipe array 140 performs shader program calculations on input data received from shader pipe interpolation unit 110 through RSS-In 120. RSS-In 120 controls the flow of input data to shader pipe array 140. Sequencer 130 controls the flow of data through shader pipe array 140 as well as to identify a defective shader pipe within shader pipe array 140. In the event that there is no defective shader pipe, the processed data continues through RSS-Out 160 to the shader pipe output 170.

In the event there is a defective shader pipe in shader pipe array 140, sequencer 130 notifies RSS-In 120 of the location of the defective shader pipe. RSS-In 120 then transfers the data destined to the defective shader pipe via a direct horizontal path from shader pipe array 140 to redundant shader pipe array 150. Redundant shader pipe array 150 is responsible to "effectively" repair the defective shader pipe by processing the shader pipe data originally targeted to be processed by the defective shader pipe. Once the shader pipe data is processed by redundant shader pipe array 150, the data is returned to RSS-Out 160 that places the redundant shader pipe data at the correct location and at the proper time as it would have been if the shader pipe had not been found to be defective.

Shader pipe array 140 and redundant shader pipe array 150 can also issue a texture request to texture filter 155. In this instance texture filter 155 generates appropriate addresses to cache system (not shown) that contains texel data associated with pixels. The cache system, after receiving the address, will return the associated texel data to texture filter 155.

In another embodiment, in the event that there is no defective shader pipe, redundant shader pipe array 150 can be used for other purposes, including, as an example, additional rendering calculations on input data. As an alternative embodiment, if special diagnostic testing, e.g., software code or hardware testing circuitry, identifies a shader pipe to be only intermittently defective, or newly defective, then the control register (not shown) can be configured such that the shader pipe data for the intermittently, or newly, defective shader pipe would only be transferred to the redundant shader array for processing.

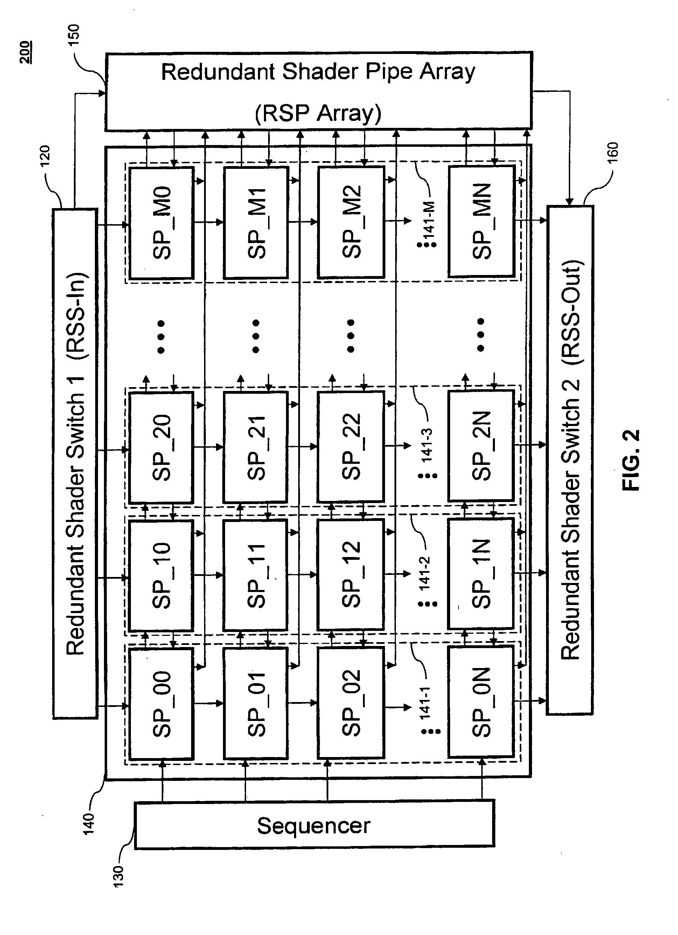

FIG. 2 illustrates a more detailed view of the shader pipe array 140 according to an embodiment of the present invention. In this embodiment, shader pipe array 140 comprises one or more vertical shader pipe columns shown as vertical shader pipe columns 141-1, 141-2, 141-3, and 141-4 through 141-M, where "M" represents a positive integer greater than one. Each vertical shader pipe column, such as 141-1A, comprises one or more shader pipe blocks, here represented as SP_00 through SP_0N, where "N" represents a positive integer greater than one.

In FIG. 2, as an example, if sequencer 130 identifies the shader pipe located in shader pipe block SP_12 as being defective, then RSS-In 120 would transfer the data originally destined to the defective pipe, SP_12, via the horizontal path, to redundant shader pipe array 150 for processing. Once redundant shader pipe array 150 processes the shader pipe data originally destined to the defective shader pipe, the processed shader pipe data would be transferred from redundant shader pipe array 150 to RSS-Out 160.

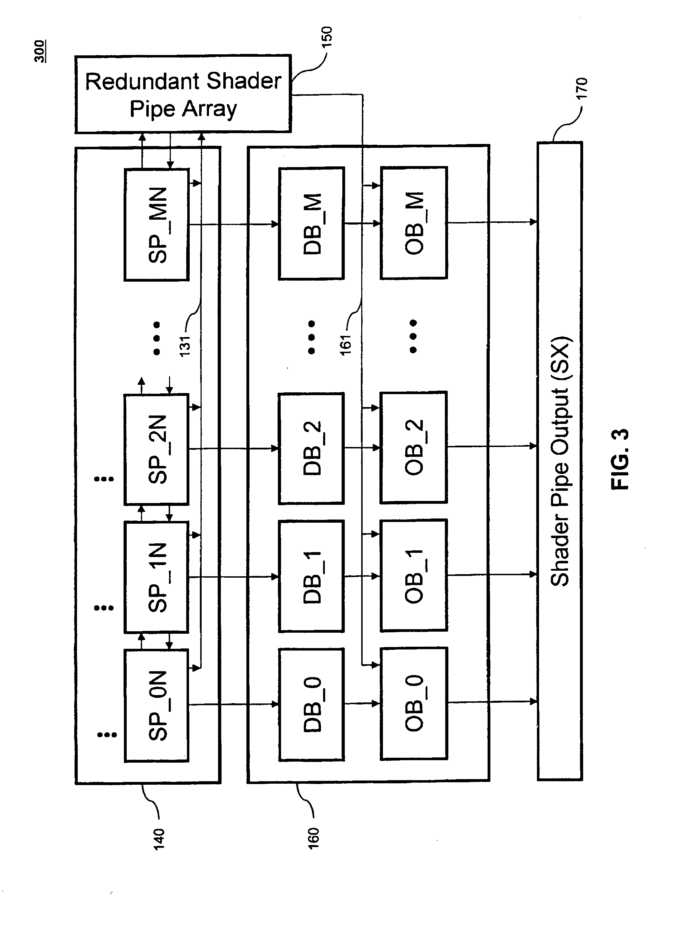

FIG. 3 illustrates a more detailed view of RSS-Out 160 according to an embodiment of the present invention. RSS-Out 160 comprises a set of delay buffers labeled DB_0 through DB_M and a set of output buffers labeled OB_0 through OB_M. Each set of delay buffers and output buffers, for example DB_0 and OB_0, are aligned with the corresponding vertical shader pipe column in shader pipe array 140, e.g., column 0 comprised of block SP_00 through SP_0N.

The purpose of a delay buffer is to hold the data output of the vertical shader pipe column in shader pipe array 140 for a sufficient period of time to allow redundant shader pipe array 150 results to be re-aligned to complete the processing of shader pipe data and to transfer the processed shader pipe data back to the appropriate column of RSS-Out 160. As an example, if sequencer 130 indicates a defective shader pipe in vertical shader pipe column 2, specifically in block SP_2N, then shader pipe data that was destined for the defective shader pipe SP_2N would be transferred to redundant shader pipe array 150 via the horizontal path associated with row N, illustrated in FIG. 3 as 131. Redundant shader pipe array 150 would process the shader pipe data and would then return the processed shader pipe data to RSS-Out 160 via the return path illustrated in FIG. 3 as 161. In this example, since the defective pipe was located in column 2, the processed shader pipe data would be returned to output buffer OB_2. Because of the delay buffer, in this example DB_2, the output buffer, in this case OB_2 would be able to insert the processed shader pipe data into the output stream for column 2 to take the place of the shader pipe data that was originally in SP_2N.

In one embodiment, the data can be processed as a Single Instruction Multiple Data (SIMD) where the defective lane is replaced with a redundant unit where sequencer 130 issues all the instructions necessary for processing, including export instructions. Therefore, RSS-Out 160 performs a re-alignment of the data on an instruction basis. However, in another embodiment, the SIMD approach can be replaced by a Multiple Instruction stream, Multiple Data stream (MIMD) where the components function in a parallel and independent manner.

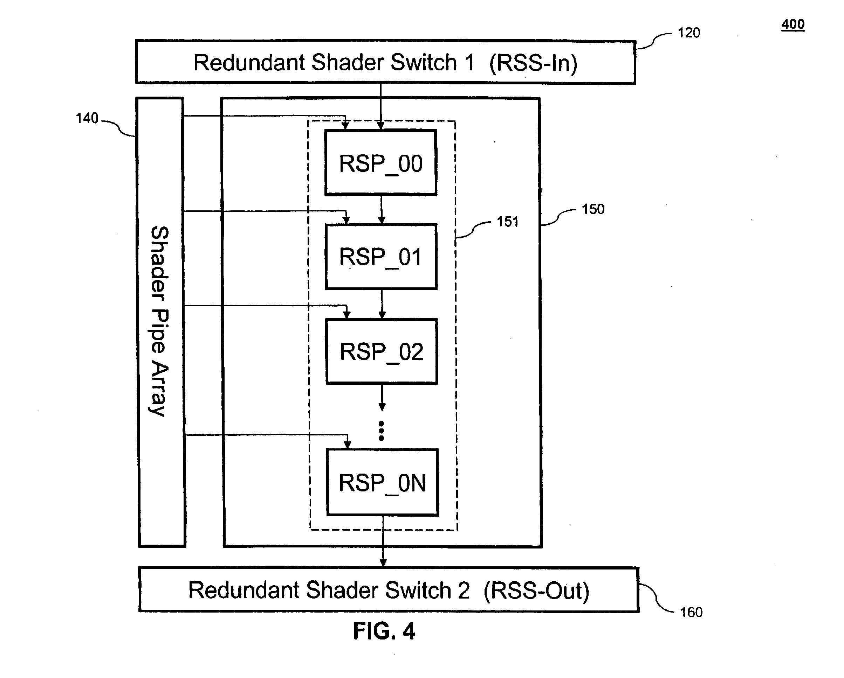

FIG. 4 illustrates a more detailed view of redundant shader pipe array 150 according to an embodiment of the present invention. In this embodiment redundant shader pipe array 150 comprises a single column outlined in FIG. 4 as 151. In this configuration redundant shader pipe array 150 can process shader pipe data destined for up to one defective shader pipe per row, but can repair up to N rows. The RSP_00 block can process shader pipe data destined for a single defective shader pipe within row 0 of shader pipe array 140 that comprises blocks SP_00 through SP_M0. In a similar manner block RSP_01 can process shader pipe data destined for a single defective shader pipe within row 1 of shader pipe array 140 that comprises blocks SP_01 through SP_M1 and so forth for redundant shader pipe array 150 rows through RSP_0N.

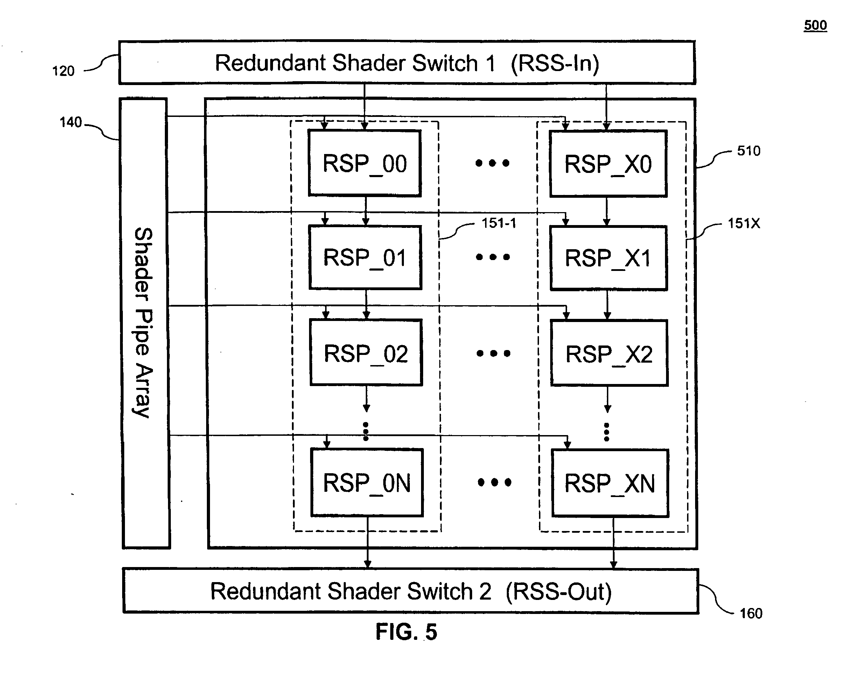

FIG. 5 illustrates a multi-column redundant shader pipe array 510 according to an embodiment of the present invention. In this embodiment redundant shader pipe array 510 comprises multiple columns outlined in FIG. 5 as 151-1 through 151X, where X is a positive integer greater than one. In this configuration redundant shader pipe array 510 can process shader pipe data destined for up to X defective shader pipes per row. The number of columns ("X") in redundant shader pipe array 510 is independent of the number of columns in shader pipe array 140 ("M"), but would be a function of the number of concurrent defective shader pipes in a single row for which shader pipe data is desired to be simultaneously processed.

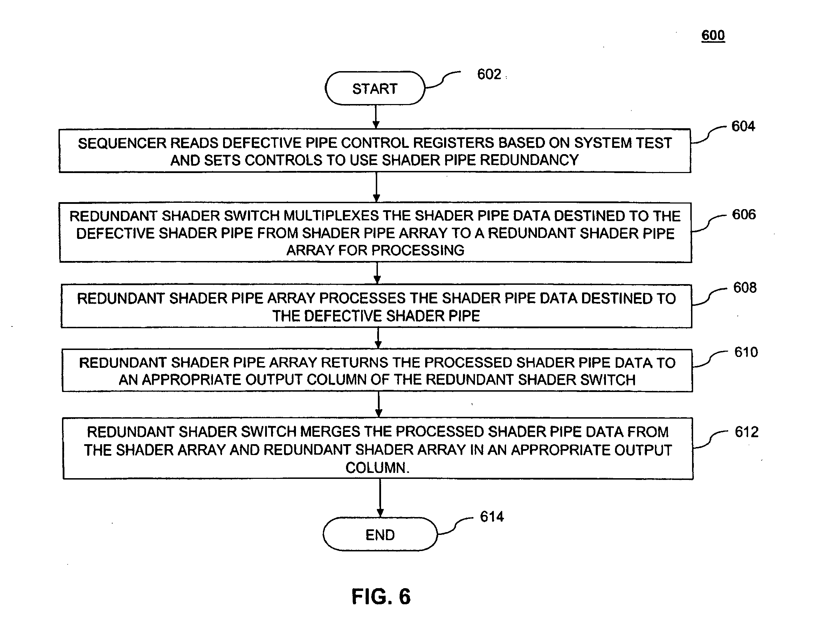

FIG. 6 is a flowchart depicting a method 600 for shader pipe data repairing using a redundant shader switch. Method 600 begins at step 602. In step 604, a sequencer reads defective shader pipe control registers based on system test results and set controls to use shader pipe redundancy. In step 606 a redundant shader switch multiplexes the shader pipe data destined to a defective shader pipe from the shader pipe array to a redundant shader pipe array for processing. In step 608 the redundant shader pipe performs the actual processing of the shader pipe data that was destined to the defective shader pipe.

In step 610, the redundant shader pipe array returns the processed shader pipe data to the appropriate output column of the redundant shader switch. In step 612 the redundant shader switch merges the processed shader pipe data from the shader array and redundant shader array in the appropriate output column.

The functions, processes, systems, and methods outlined in FIGs. 1, 2, 3, 4, 5, and 6 can be implemented in software, firmware, or hardware, or using any combination thereof. If programmable logic is used, such logic can execute on a commercially available processing platform or a special purpose device.

As would be apparent to one skilled in the relevant art, based on the description herein, embodiments of the present invention can be designed in software using a hardware description language (HDL) such as, for example, Verilog or VHDL. The HDL-design can model the behavior of an electronic system, where the design can be synthesized and ultimately fabricated into a hardware device. In addition, the HDL-design can be stored in a computer product and loaded into a computer system prior to hardware manufacture.

It is to be appreciated that the Detailed Description section, and not the Summary and Abstract sections, is intended to be used to interpret the claims. The Summary and Abstract sections can set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

While various embodiments of the present invention have been described above, it should be understood that they have been presented by way of example only, and not limitation. It will be apparent to persons skilled in the relevant art that various changes in form and detail can be made therein without departing from the scope of the invention defined by the appended claims. Thus, the breadth and scope of the present invention should not be limited by any of the above-described exemplary embodiments, but should be defined only in accordance with the following claims.

## Claims

1. A redundant shader pipe repair system, comprising:
a Shader Pipe (SP) array (140) configured to perform rendering calculations on input data;
a Sequencer (130) configured to identify defective shader pipes within the shader pipe array and to control a flow of data through the SP array (140);
a Redundant Shader Switch (RSS) (120,160) configured to control the switching of data input and output signals to a Redundant Shader Pipe (RSP) array (150) when a defective shader pipe within the SP array (140) is identified by the Sequencer (130); and
a Redundant Shader Pipe (RSP) array (150) configured to process shader pipe data destined to the defective shader pipe, wherein the RSP array (150) further comprises one or more sets of Vertical Redundant Shader Pipe Columns (141) wherein each Vertical Redundant Shader Pipe Column comprises one or more RSP blocks, where there is a single RSP block per row;
wherein in response to the Sequencer (130) identifying a defective shader pipe, a control register is configured to map data for the defective shader pipe to the RSP array (150) for processing; and
wherein in response to the Sequencer (130) identifying the defective shader pipe in the SP array (140), the RSS switch (120,160) is configured to transfer data to the RSP array (150).

2. The redundant shader pipe repair system of claim 1, wherein
the SP array (140) further comprises one or more Vertical Shader Pipe Columns (141) wherein each Vertical Shader Pipe Column comprises one or more SP blocks, where there is a single SP block per row.

3. The redundant shader pipe repair system of claim 2, wherein
each SP block within the Vertical Shader Pipe Column (141) may contain one or more shader pipes; and
each RSP block within the Vertical Redundant Shader Pipe Column (141) may contain one or more shader pipes.

4. The redundant shader pipe repair system of claim 2, wherein each Vertical Redundant Shader Pipe Column comprises the same quantity of Redundant Shader Pipe rows as the number of Shader Pipe rows in a Vertical Shader Pipe Column (141) of the SP Array.

5. The redundant shader pipe repair system of claim 2, wherein the RSS further comprises:
an input section (120) that multiplexes shader pipe data destined to the defective shader pipe from a SP block in a Vertical Shader Pipe Column (141) within the SP array to an RSP block in a Vertical Redundant Shader Pipe Column within the RSP array for processing; and
an output section (140) that multiplexes the processed shader pipe data from the RSP block to an appropriate output column of the RSS.

6. The redundant shader pipe repair system of claim 5, wherein the shader pipe data destined to the defective shader pipe in the SP block is moved via a horizontal path to an RSP block in a Vertical Redundant Shader Pipe Column within the RSP array for processing.

7. The redundant shader pipe repair system of claim 5, wherein the output section (140) of the RSS further comprises delay pipes (DB 0-M) to realign the processed shader pipe data to output export data.

8. The redundant shader pipe repair system of claim 2, wherein each Vertical Redundant Shader Pipe Column is configured to process shader pipe data destined to one or more defective shader pipes.

9. The redundant shader pipe repair system of claim 8, wherein each Vertical Redundant Shader Pipe Column is configured to process shader pipe data destined to one defective shader pipe per row.

10. The redundant shader pipe repair system of claim 2, wherein each Vertical Redundant Shader Pipe Columns is configured to concurrently process shader pipe data destined to one or more defective shader pipes within the same row.

## Patentansprüche

1. Redundantes Schattiererpipeline-Reparatursystem, umfassend:
eine Schattiererpipeline (SP)-Anordnung (140), die zum Darstellen von Berechnungen an Eingangsdaten konfiguriert ist;
einen Sequenzierer (130), der zum Identifizieren defekter Schattiererpipelines in der Schattiererpipeline-Anordnung und zum Steuern eines Datenflusses durch die SP-Anordnung (140) konfiguriert ist;
einen redundanten Schattiererschalter (RSS) (120, 160), der zum Steuern des Umschaltens von Dateneingangs- und -ausgangssignalen an eine redundante Schattiererpipeline(RSP)-Anordnung (150) konfiguriert ist, wenn eine defekte Schattiererpipeline in der SP-Anordnung (140) vom Sequenzierer (130) erkannt wird; und
eine redundante Schattiererpipeline(RSP)-Anordnung (150), die zum Verarbeiten von Schattiererpipelinedaten konfiguriert ist, die für die defekte Schattiererpipeline bestimmt sind, wobei
die RSP-Anordnung (150) ferner einen oder mehrere Sätze vertikaler redundanter Schattiererpipelinespalten (141) umfasst, wobei jede vertikale redundante Schattiererpipelinespalte einen oder mehrere RSP-Blöcke umfasst, wobei ein einzelner RSP-Block pro Reihe vorliegt;
wobei in Reaktion darauf, dass der Sequenzierer (130) eine defekte Schattiererpipeline erkennt, ein Steuerregister dazu konfiguriert ist, Daten für die defekte Schattiererpipeline zur Verarbeitung der RSP-Anordnung (150) zuzuordnen; und
wobei in Reaktion darauf, dass der Sequenzierer (130) die defekte Schattiererpipeline in der SP-Anordnung (140) erkennt, der RSS-Schalter (120, 160) dazu konfiguriert ist, Daten an die RSP-Anordnung (150) zu übertragen.

2. Redundantes Schattiererpipeline-Reparatursystem nach Anspruch 1, wobei
die SP-Anordnung (140) ferner eine oder mehrere vertikale redundante Schattiererpipelinespalten (141) umfasst, wobei jede vertikale redundante Schattiererpipelinespalte einen oder mehrere SP-Blöcke umfasst, wobei ein einzelner SP-Block pro Reihe vorliegt.

3. Redundantes Schattiererpipeline-Reparatursystem nach Anspruch 2, wobei
jeder SP-Block in der vertikalen redundanten Schattiererpipelinespalte (141) eine oder mehrere Schattiererpipelines enthalten kann; und
jeder RSP-Block in der vertikalen redundanten Schattiererpipelinespalte (141) eine oder mehrere Schattiererpipelines enthalten kann.

4. Redundantes Schattiererpipeline-Reparatursystem nach Anspruch 2, wobei jede vertikale redundante Schattiererpipelinespalte dieselbe Menge an redundanten Schattiererpipelinereihen wie die Anzahl von Schattiererpipelinereihen in einer vertikalen Schattiererpipelinespalte (141) der SP-Anordnung enthält.

5. Redundantes Schattiererpipeline-Reparatursystem nach Anspruch 2, wobei der RSS ferner Folgendes umfasst:
einen Eingangsabschnitt (120), der Schattiererpipelinedaten, die für die defekte Schattiererpipeline von einem SP-Block in einer vertikalen Schattiererpipelinespalte (141) innerhalb der SP-Anordnung zur Verarbeitung an einen RSP-Block in einer vertikalen redundanten Schattiererpipelinespalte innerhalb der RSP-Anordnung multiplext; und
einen Ausgangsabschnitt (140), der die verarbeiteten Schattiererpipelinedaten vom RSP-Block an eine passende Ausgangsspalte des RSS multiplext.

6. Redundantes Schattiererpipeline-Reparatursystem nach Anspruch 5, wobei die Schattiererpipelinedaten, die für die defekte Schattiererpipeline im SP-Block bestimmt sind, über einen horizontalen Pfad zur Verarbeitung an einen RSP-Block in einer vertikalen redundanten Schattiererpipelinespalte innerhalb der RSP-Anordnung verschoben werden.

7. Redundantes Schattiererpipeline-Reparatursystem nach Anspruch 5, wobei der Ausgangsabschnitt (140) des RSS ferner Verzögerungspipelines (DB 0-M) zum erneuten Ausrichten der verarbeiteten Schattiererpipelinedaten an den Ausgangsexportdaten umfasst.

8. Redundantes Schattiererpipeline-Reparatursystem nach Anspruch 2, wobei jede vertikale redundante Schattiererpipelinespalte dazu konfiguriert ist, Schattiererpipelinedaten zu verarbeiten, die für eine oder mehrere defekte Schattiererpipelines bestimmt sind.

9. Redundantes Schattiererpipeline-Reparatursystem nach Anspruch 8, wobei jede vertikale redundante Schattiererpipelinespalte dazu konfiguriert ist, Schattiererpipelinedaten zu verarbeiten, die für eine defekte Schattiererpipelines pro Reihe bestimmt sind.

10. Redundantes Schattiererpipeline-Reparatursystem nach Anspruch 2, wobei jede vertikale redundante Schattiererpipelinespalte dazu konfiguriert ist, Schattiererpipelinedaten, die für eine oder mehrere Schattiererpipelines innerhalb derselben Reihe bestimmt sind, gleichzeitig zu verarbeiten.

## Revendications

1. Système de réparation de pipeline de nuanceur redondant, comprenant :
un réseau de pipelines de nuanceur (SP) (140) configuré pour effectuer des calculs de rendu sur des données d'entrée ;
un séquenceur (130) configuré pour identifier les pipelines de nuanceur défectueux à l'intérieur du réseau de pipelines de nuanceur et pour commander un flux de données à travers le réseau SP (140) ;
un commutateur de nuanceur redondant (RSS) (120, 160) configuré pour commander la commutation de signaux de sortie et d'entrée de données à un réseau de pipelines de nuanceur redondant (RSP) (150) lorsqu'un pipeline de nuanceur défectueux à l'intérieur du réseau SP (140) est identifié par le séquenceur (130) ; et
un réseau de pipelines de nuanceur redondant (RSP) (150) configuré pour traiter des données de pipeline de nuanceur destinées au pipeline de nuanceur défectueux, dans lequel
le réseau RSP (150) comprend en outre un ou plusieurs ensembles de colonnes de pipeline de nuanceur rendondant verticales (141) dans lequel chaque colonne de pipeline de nuanceur redondant verticale comprend un ou plusieurs blocs RSP, où il y a un seul bloc RSP par ligne ;
dans lequel en réponse au séquenceur (130) identifiant un pipeline de nuanceur défectueux, un registre de commande est configuré pour affecter des données pour le pipeline de nuanceur défectueux au réseau RSP (150) pour un traitement ; et
dans lequel en réponse au séquenceur (130) identifiant le pipeline de nuanceur défectueux dans le réseau SP (140), le commutateur RSS (120, 160) est configuré pour transférer des données au réseau RSP (150).

2. Système de réparation de pipeline de nuanceur redondant selon la revendication 1, dans lequel
le réseau SP (140) comprend en outre une ou plusieurs colonnes de pipeline de nuanceur verticales (141) dans lequel chaque colonne de pipeline de nuanceur verticale comprend un ou plusieurs blocs SP, où il y a un seul bloc SP par ligne.

3. Système de réparation de pipeline de nuanceur redondant selon la revendication 2, dans lequel
chaque bloc SP à l'intérieur de la colonne de pipeline de nuanceur verticale (141) peut contenir un ou plusieurs pipelines de nuanceur ; et dans lequel
chaque bloc RSP à l'intérieur de la colonne de pipeline de nuanceur redondant verticale (141) peut contenir un ou plusieurs pipelines de nuanceur.

4. Système de réparation de pipeline de nuanceur redondant selon la revendication 2, dans lequel chaque colonne de pipeline de nuanceur redondant verticale comprend la même quantité de lignes de pipeline de nuanceur redondant que le nombre de ligne de pipeline de nuanceur dans une colonne de pipeline de nuanceur verticale (141) du réseau SP.

5. Système de réparation de pipeline de nuanceur redondant selon la revendication 2, dans lequel le RSS comprend en outre :
une section d'entrée (120) qui multiplexe des données de pipeline de nuanceur destinées au pipeline de nuanceur défectueux à partir d'un bloc SP dans une colonne de pipeline de nuanceur verticale (141) à l'intérieur du réseau SP à un bloc RSP dans une colonne de pipeline de nuanceur redondant verticale à l'intérieur du réseau RSP pour un traitement ; et
une section de sortie (140) qui multiplexe les données de pipeline de nuanceur traitées à partir du bloc RSP à une colonne de sortie appropriée du RSS.

6. Système de réparation de pipeline de nuanceur redondant selon la revendication 5, dans lequel les données de pipeline de nuanceur destinées au pipeline de nuanceur défectueux dans le bloc SP sont déplacées via un trajet horizontal vers un bloc RSP dans une colonne de pipeline de nuanceur redondant verticale à l'intérieur du réseau RSP pour un traitement.

7. Système de réparation de pipeline de nuanceur redondant selon la revendication 5, dans lequel la section de sortie (140) du RSS comprend en outre des pipelines de retard (DB 0-M) pour réaligner les données de pipeline de nuanceur traitées à des données d'exportation de sortie.

8. Système de réparation de pipeline de nuanceur redondant selon la revendication 2, dans lequel chaque colonne de pipeline de nuanceur redondant verticale est configurée pour traiter des données de pipeline de nuanceur destinées à un ou plusieurs pipelines de nuanceur défectueux.

9. Système de réparation de pipeline de nuanceur redondant selon la revendication 8, dans lequel chaque colonne de pipeline de nuanceur redondant verticale est configurée pour traiter des données de pipeline de nuanceur destinées à un pipeline de nuanceur défectueux par ligne.

10. Système de réparation de pipeline de nuanceur redondant selon la revendication 2, dans lequel chaque colonne de pipeline de nuanceur redondant verticale est configurée pour traiter simultanément des données de pipeline de nuanceur destinées à un ou plusieurs pipelines de nuanceur défectueux à l'intérieur de la même ligne.
